# DEMANDE DE BREVET EUROPEEN

(11) **EP 1 262 222 A1**
(43) Date de publication de la demande: **04.12.2002**
(21) Numéro de dépôt: 02291073.1
(22) Date de dépôt: 29.04.2002
(51) Int. Cl.: B01D 17/06

(54) **Dispositif et methode de separation comportant un electro-coalesceur tubulaire**

(30) Priorité: 10.05.2001 FR 0106217
(71) Demandeur: INSTITUT FRANCAIS DU PETROLE, 92852 Rueil-Malmaison Cedex (FR)
(72) Inventeur: Noik, Christine, 78230 Le Pecq (FR); Trapy, Jean, 92500 Rueil Malmaison (FR)

(57) **Abrégé**

La présente invention concerne un dispositif de séparation d'un effluent comportant des phases de densité et de conductivité différentes, le dispositif comportant un couple d'électrodes (12, 13), des moyens d'introduction (10) de l'effluent entre lesdites électrodes, des moyens de séparation (3) et d'évacuation (4) desdites phases séparées. Selon l'invention, les moyens de séparation comportent au moins un élément de centrifugation comprenant un canal hélicoïdal (19) dans lequel l'effluent est centrifugé après passage entre les électrodes.

## Description

La présente invention concerne le domaine des traitements d'effluents émulsionnés, notamment les effluents pétroliers provenant de puits de production. Les émulsions concernées sont celles dont la phase dispersée est électriquement conductrice contrairement à la phase continue, par exemple de l'eau dispersée dans une phase organique, telle que de l'huile.

Il est important de séparer l'eau de l'effluent produit pour limiter la taille des équipements de traitement et de transport. Après le passage de l'effluent émulsionné dans des séparateurs eau/huile conventionnels, celui-ci contient encore de l'ordre de 1 à 5% d'eau émulsionnée dans l'huile. La présente invention a pour objectif de diminuer ces quantités résiduelles d'eau et de sels afin de répondre aux spécifications techniques des procédés en aval.

On connaît le document US-5647981 qui décrit un dispositif qui combine le principe d'un l'électro-coalesceur avec de la centrifugation.

Les émulsions eau dans l'huile peuvent être « cassées» par coalescence des gouttes d'eau grâce à l'action d'un champ électrique. Cependant, dans le but d'augmenter l'efficacité de ces séparateurs électrostatiques, on tente d'augmenter le potentiel électrique entre les électrodes avec le risque réel de voir apparaître les phénomènes de claquage entre électrodes. D'autre part, compte tenu du temps de résidence nécessaire entre les électrodes, le débit d'effluent pouvant être traité est faible, à moins d'une installation démesurée en taille.

La présente invention pallie les inconvénients connus en optimisant la combinaison entre un électro-coalesceur de forme déterminée et des moyens de centrifugation et de séparation spécifiques audit coalesceur.

Ainsi, la présente invention concerne un dispositif de séparation d'un effluent comportant des phases de densité et de conductivité différentes, le dispositif comportant un couple d'électrodes, des moyens d'introduction de l'effluent entre lesdites électrodes, des moyens de séparation et d'évacuation desdites phases séparées. Selon l'invention, les moyens de séparation comportent au moins un élément de centrifugation comprenant un canal hélicoïdal dans lequel l'effluent est centrifugé après passage entre les électrodes.

Le canal hélicoïdal peut être constitué par une paroi en hélice placée dans un espace annulaire.

La paroi hélicoïdale peut être en contact avec le tube interne mais peut ménager un jeu avec la paroi du tube externe.

Le canal hélicoïdal peut être constitué par un tube en hélice.

Lesdites électrodes peuvent être en forme de cylindres disposés selon le même axe.

La section de passage du canal hélicoïdal peut être déterminée pour que la vitesse de l'effluent augmente par rapport à la vitesse de l'effluent au niveau desdites électrodes.

La phase la plus légère peut être évacuée par un conduit axial.

Les moyens d'évacuation peuvent comporter un cyclone et un orifice axial pour l'évacuation d'au moins une partie de la phase centrifugée.

Les moyens d'évacuation peuvent comporter au moins un orifice en périphérie dudit effluent centrifugé pour évacuer au moins une partie de la phase centrifugée.

L'invention concerne également une méthode de séparation d'un effluent comportant des phases de densité et de conductivité différentes, comportant au moins une étape d'électro-coalescence entre deux électrodes, une étape de séparation, une étape d'évacuation desdites phases séparées. Selon la méthode, l'étape de séparation succède à l'étape de coalescence et comprend au moins une étape de centrifugation de l'effluent dans un canal hélicoïdal.

L'étape de centrifugation peut être telle que la vitesse de l'effluent est augmentée par rapport à sa vitesse entre lesdites électrodes.

Une étape d'évacuation des phases centrifugées peut succéder à l'étape de centrifugation par la mise en oeuvre d'un cyclone dans lequel débouche ledit canal hélicoïdal.

On peut évacuer au moins une partie de la phase centrifugée par au moins un orifice disposé en périphérie et en aval dudit canal hélicoïdal.

La présente invention sera mieux comprise et ses avantages apparaîtront plus clairement à la lecture de la description suivante d'un exemple de réalisation, nullement limitatif, illustré par les figures ci-annexées, parmi lesquelles :
- la figure 1 montre schématiquement le principe de l'invention,
- la figure 2 montre une détail de la sortie du séparateur selon l'invention,
- la figure 3 illustre une variante du centrifugeur,
- la figure 4 illustre l'efficacité de la présente invention.

L'agencement général d'un exemple de réalisation d'un dispositif selon l'invention répond aux préconisations suivantes :
- le fluide est de préférence introduit sous pression entre deux parois cylindriques et concentriques, l'entrée tangentielle n'est pas indispensable mais est de préférence conservée ;
- l'électro-coalesceur a une géométrie déterminée pour obtenir un temps de résidence de l'effluent suffisant. Par exemple, il peut avoir une longueur d'environ 1 m et l'espace annulaire est tel que le temps de séjour du fluide est de 10 secondes au débit de 500 l/h. Pour cela, la distance entre les cylindres est ainsi de 7,86 mm (différence de rayon entre un tube de 2 pouces (50,8 mm) et un tube de 1 pouce (25,4 mm)) ;
- un centrifugeur fait suite à l'électro-coalesceur dont l'élément moteur est une surface hélicoïdale insérée entre deux cylindres concentriques sur une longueur de 500 mm. La distance entre cylindres a été réduite à 6,35 mm (différence de rayon entre un tube de 1 pouce 1/2 et un tube de 1 pouce) afin d'accroître la vitesse du fluide lorsqu'il s'écoule dans le centrifugeur ;
- le centrifugeur débouche sur un séparateur proprement dit. Cette partie est essentielle et de conception délicate où l'on doit éviter que la turbulence intense développée à la sortie du centrifugeur vienne disperser à nouveau les gouttelettes d'eau.

Les tubes ont été choisis dans les standards de l'industrie pétrolière, ceci afin de faciliter une réalisation industrielle avec du matériel existant.

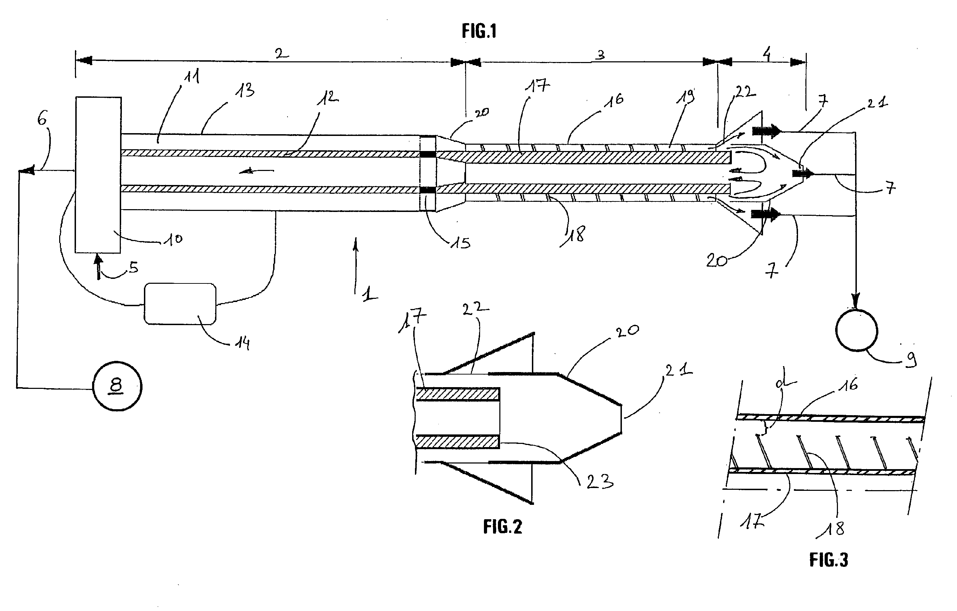

Sur la figure 1 qui représente l'ensemble du dispositif 1 selon l'invention, les références 2, 3 et 4 représentent respectivement les parties coalesceur, centrifugeur et séparateur. La flèche 5 représente l'entrée de l'effluent contenant l'émulsion dans le dispositif, la flèche 6 représente la sortie de l'effluent déshydraté dirigé vers les installations de transport et de raffinage 8, les flèches 7 représentent les différentes sorties de la phase essentiellement aqueuse dirigée ensuite vers des installations de traitement des rejets 9.

Les moyens d'introduction de l'effluent émulsionné dans le coalesceur sont tels que le fluide entre tangentiellement dans l'espace annulaire 11 défini par l'extérieur de l'électrode 12 et l'intérieur de l'enveloppe 13. Les dimensions de l'électro-coalesceur, diamétrales et longitudinales sont déterminées pour que, compte tenu du débit d'injection de l'effluent par les moyens 10, le temps de résidence dans l'entrefer des électrodes est tel que la coalescence des gouttes d'eau est optimale. Les électrodes 12 et 13 sont reliées électriquement à un générateur de champ électrique 14. La circulation de l'effluent dans le coalesceur étant hélicoïdale, les électrodes 12 et 13 sont de préférence de forme cylindrique. A l'extrémité du coalesceur, des moyens d'isolation électrique 15 séparent les électrodes des moyens d'entrée du centrifugeur 3.

Le centrifugeur 3 est constitué par un tube cylindrique extérieur 16, un tube intérieur 17 en continuité avec l'électrode centrale 12 du coalesceur, et d'une paroi hélicoïdale 18 en contact avec l'intérieur du tube 16 et l'extérieur du tube 17, de façon à former un canal continu hélicoïdal 19 autour de l'axe longitudinal du dispositif. La forme de ce canal 19 est telle que l'effluent en sortie du coalesceur est conduit à être centrifugé sur toute la longueur du centrifugeur 3. Cette longueur est d'ailleurs déterminée pour optimiser l'effet de centrifugation. Des moyens de raccordement coniques 20 peuvent être utilisés entre le coalesceur et le centrifugeur afin de réduire la section principale de passage de l'effluent afin d'augmenter la vitesse de déplacement du fluide dans le centrifugeur. Plus grande est la vitesse, meilleure peut être la centrifugation, et donc la séparation des phases.

D'une manière équivalente, on peut réaliser le centrifugeur à partir une conduite de section adaptée et formée selon une hélice pour réaliser la centrifugation du fluide. On peut, par exemple, enrouler au moins un tube selon une hélice autour d'un tube.

La figure 3 montre une variante du centrifugeur dans laquelle la paroi hélicoïdale 18 n'est pas en contact avec la paroi interne du tube extérieur 16. Le jeu d permet la constitution d'une couche de la phase centrifugée qui peut être libre de s'écouler également dans le sens longitudinal, c'est à dire de haut en bas quand le dispositif est disposé verticalement, ce qui est généralement préférable.

Un élément de séparation 4 est fixé sur l'extrémité du centrifugeur. Son rôle est de retirer les gouttes d'eau qui se trouvent par centrifugation au contact de la paroi extérieure. Une partie conique 20 en prolongement du centrifugeur produit une séparation de type cyclonique, la phase centrifugée s'évacuant par l'orifice 21, la phase la plus légère (la phase organique), s'évacuant selon la direction de l'axe du cône par l'espace intérieur du tube 17 prolongé par le conduit intérieur de l'électrode 12. L'élément de séparation 4 comporte en plus une surface d'ouverture latérale 22 qui permet de séparer la plus grande partie de la phase aqueuse en contact avec la paroi intérieure du tube 16.

La figure 2 montre plus en détail les moyens de séparations. Les mêmes références de la figure 1 ont été reportées sur cette figure. Il faut noter que l'extrémité 23 du tube 17 se prolonge après l'ouverture 22. L'ouverture 22 est de préférence une couronne complète pour que la plupart du liquide aqueux centrifugé s'évacue par ce moyen.

### Résultats :

Toutes les évaluations des dispositifs selon l'invention ont été effectuées en simulant les fonctionnements avec le code connu de mécanique des fluides FLUENT. Les techniques de calcul par volumes finis qui sont mises en oeuvre nécessitent le maillage des volumes internes au moyen du mailleur GAMBIT associé au code de calcul.

Les conditions imposées au code FLUENT pour le calcul sont :
Solveur :
   - 3D ;
   - stationnaire ;
   - « Coupled Implicit » (CI) ou « Segregated Implicit » (SI) selon les cas.
Modèles :
   - Turbulence :type K-ε « realizable »,
   - Lois de paroi type « non-equilibrium »
Fluide :
   Huile de « Fontaine au Bron » : masse volumique = 850 kg/m3;
   viscosité cinématique = 0,0083 m2/s
Conditions aux limites :
   Le débit imposé à l'entrée : 500 l/heure et 1000 l/heure (0,12 kg/s et 0,236 kg/s) ;
   Les pressions aux sorties : elle est fixée à 0 bar relatif à la sortie de l'huile et les valeurs de pression aux sorties eau/huile sont fixées au cas par cas de manière à maintenir un taux de 80% de récupération d'huile par rapport au débit total (taux de récupération = débit d'huile épurée/débit total). Cette condition est nécessaire car le taux de séparation dépend du taux de récupération.
Convergence :
   Les calculs sont considérés comme convergés lorsque les valeurs des résidus des différents paramètres (masse, pression et vitesses) sont stabilisées à leurs valeurs minimum et que le bilan masse du système est inférieur à 1‰ du débit total.

On peut vérifier que le temps de passage du fluide dans l'électrocoalesceur est bien conforme à ce qui était prévu : soit, environ 10 secondes pour 500 l/h. Ce temps va être logiquement divisé par un facteur 2 à chaque doublement du débit. La longueur de l'électro-coalesceur pourra donc être ajustée en fonction du débit nominal choisi.

Le passage dans le centrifugeur entraîne bien le fluide dans une rotation intense. Les accélérations centrifuges générées peuvent être relativement importantes et égaler plusieurs dizaines de fois l'accélération de la pesanteur. L'objectif recherché est donc atteint et on vérifie le maintient du mouvement par la paroi hélicoïdale tout le long du centrifugeur.

La rotation du fluide en sortie du centrifugeur se maintient dans le séparateur mais à un niveau moindre dès qu'elle n'est plus guidée. L'effet centrifuge est néanmoins suffisant pour maintenir en périphérie la majorité des gouttes.

Dans le cas idéal, la particule centrifugée s'échappe immédiatement par l'ouverture latérale 22, sans être dispersée par la turbulence. C'est la situation optimale.

La particule qui n'a pas été capturée par l'ouverture latérale peut ensuite rester centrifugée en périphérie du cône 20 et s'évacuer par l'orifice 21 de l'extrémité du tube.

La particule insuffisamment centrifugée peut être ramenée par la turbulence au centre de l'écoulement et être entraînée par le flux de retour de l'huile.

Il faut préciser que les performances paraissent très sensibles à l'emplacement et à la géométrie des orifices de sorties et d'évacuation.

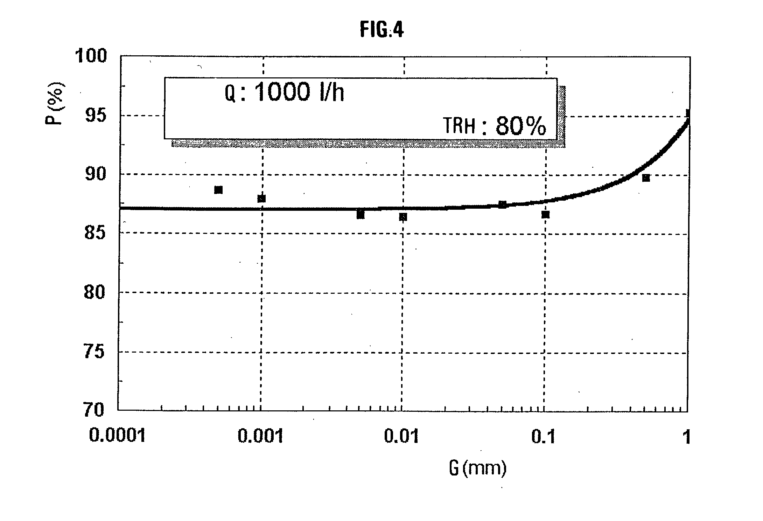

La taille des gouttelettes doit logiquement avoir une influence sur la séparation puisqu'elle détermine la contribution de la force centrifuge. Ceci est confirmé par la figure 4 qui présente des résultats obtenus pour un taux imposé de récupération huile TRH de 80%, à un débit Q de 1000 l/h. Le graphe donne la proportion P de gouttes récupérées en fonction, en abscisse du diamètre des gouttes G donné en millimètre. On y constate bien que les grands diamètres de gouttes correspondent aux plus forts taux de séparation, mais il est intéressant de remarquer que la décroissance du taux P avec celle du diamètre G se stabilise rapidement à une valeur d'environ 87%. Ce résultat montre qu'en dessous d'une taille de diamètre de gouttes de 0,1 mm, le diamètre n'est apparemment plus déterminant pour le taux de séparation dans un dispositif selon l'invention.

Les vitesses des écoulements et l'efficacité du centrifugeur dépendent directement du débit imposé dans le système. Un phénomène de saturation semble devoir apparaître au-dessus d'un débit de 2000 l/h pour le dispositif en exemple.

Pour une longueur donnée du centrifugeur, le pas de l'hélice détermine fortement le pouvoir séparateur. Le taux de séparation est quasi proportionnel au pas de l'hélice. Il y a donc intérêt à diminuer le pas, avec toutefois comme modération la perte de charge qui croît plus que linéairement avec le pas.

La perte de charge dans le dispositif correspond en fait à la pression qu'il faut appliquer à l'entrée pour assurer un débit donné.

La perte de charge est logiquement liée à la longueur du centrifugeur et au pas de l'hélice. Sa valeur a tendance à saturer lorsque la longueur augmente et, inversement, à croître paraboliquement avec le pas.

En ce qui concerne les puissances de pompage, si pompage il doit y avoir, au débit de 2000 l/h, la perte de charge atteint 2,76 bars, ce qui correspond à une puissance hydraulique nette de 130 kW. Par contre, cette puissance n'est plus que de 3,5 kW au débit de 500 l/h.

La conception d'un séparateur pour des émulsions eau dans huile doit être adaptées à des mélanges aux masses volumiques peu distinctes et à la viscosité relativement forte du fluide porteur. Le calcul au moyen d'un modèle direct de mécanique des fluides, en l'occurrence le code FLUENT, permet d'en cerner les difficultés.

La première d'entre elles est de maintenir en mouvement de rotation le fluide porteur très visqueux. La paroi (ou canalisation) hélicoïdale semble être un bon moyen pour imprimer ce mouvement et le conserver, le pas de l'hélice et sa longueur étant les paramètres pour ajuster l'intensité du mouvement centrifuge et sa durée. L'inconvénient de cette solution est la perte de charge qu'elle induit, mais le calcul montre qu'elle reste acceptable.

La principale difficulté demeure la séparation des gouttelettes d'eau d'avec le fluide porteur. Pour que la centrifugation puisse effectivement jouer son rôle il est nécessaire d'atteindre des vitesses et des accélérations élevées, ce qui crée une turbulence importante à la sortie du centrifugeur et le risque de disperser à nouveau les gouttelettes. La simulation montre très bien que des configurations qui fonctionnent parfaitement en régime laminaire sont rendues totalement inefficaces lors de la prise en compte de la turbulence.

Le calcul permet de tester commodément différentes configurations et d'en sélectionner les meilleures. Il a ainsi contribué à déterminer une conception qui permet un taux de séparation de 87% au débit de 1000 l/h, et ceci pour un taux de récupération huile de 80%. Parmi les paramètres importants, la taille des gouttelettes a été prise en compte et le calcul a indiqué que son influence pouvait être limitée. Ainsi, dans le cas étudié le taux de séparation tend à rester constant pour des diamètres inférieurs à 0,1 mm. On peut noter que ce taux de séparation est stabilisé à un niveau relativement élevé (87%) même pour des diamètres de gouttes faibles (0,01 mm), diamètres pour lesquels les hydrocyclones conventionnels sont peu efficaces.

## Revendications

1. Dispositif de séparation d'un effluent comportant des phases de densité et de conductivité différentes, ledit dispositif comportant un couple d'électrodes (12, 13), des moyens d'introduction (10) de l'effluent entre lesdites électrodes, des moyens de séparation (3) et d'évacuation (4) desdites phases séparées, **caractérisé en ce que** lesdits moyens de séparation comportent au moins un élément de centrifugation (3) comprenant un canal hélicoïdal (19) dans lequel ledit effluent est centrifugé après passage entre lesdites électrodes.

2. Dispositif selon la revendication 1, dans lequel ledit canal hélicoïdal est constitué par une paroi (18) en hélice placée dans un espace annulaire.

3. Dispositif selon la revendication 2 dans lequel ladite paroi hélicoïdale est en contact avec le tube interne (17) mais ménage un jeu (d) avec la paroi du tube externe (16).

4. Dispositif selon la revendication 1, dans lequel ledit canal hélicoïdal est constitué par un tube en hélice.

5. Dispositif selon l'une des revendications précédentes, dans lequel lesdites électrodes sont en forme de cylindres (12, 13) disposés selon le même axe.

6. Dispositif selon l'une des revendications précédentes, dans lequel la section de passage dudit canal hélicoïdal est déterminée pour que la vitesse de l'effluent augmente par rapport à la vitesse de l'effluent au niveau desdites électrodes.

7. Dispositif selon l'une des revendications précédentes, dans lequel la phase la plus légère est évacuée par un conduit axial.

8. Dispositif selon l'une des revendications précédentes, dans lequel les moyens d'évacuation comportent un cyclone (20) et un orifice axial (21) pour l'évacuation d'au moins une partie de la phase centrifugée.

9. Dispositif selon l'une des revendications précédentes, dans lequel les moyens d'évacuation comportent au moins un orifice (22) en périphérie dudit effluent centrifugé pour évacuer au moins une partie de la phase centrifugée.

10. Méthode de séparation d'un effluent comportant des phases de densité et de conductivité différentes, comportant au moins une étape d'électro-coalescence entre deux électrodes, une étape de séparation, une étape d'évacuation desdites phases séparées, **caractérisée en ce que** l'étape de séparation succède à l'étape de coalescence et comprend au moins une étape de centrifugation de l'effluent dans un canal hélicoïdal.

11. Méthode selon la revendication 10, dans laquelle l'étape de centrifugation est telle que la vitesse de l'effluent est augmentée par rapport à sa vitesse entre lesdites électrodes.

12. Méthode selon l'une des revendications 10 ou 11, dans laquelle une étape d'évacuation des phases centrifugées succède à l'étape de centrifugation par la mise en oeuvre d'un cyclone dans lequel débouche ledit canal hélicoïdal.

13. Méthode selon l'une des revendications 10 à 12, dans lequel on évacue au moins une partie de la phase centrifugée par au moins un orifice disposé en périphérie et en aval dudit canal hélicoïdal.
